# EUROPEAN PATENT SPECIFICATION

(11) **EP 4 306 214 B1**
(45) Date of publication and mention of the grant of the patent: **19.02.2025**
(21) Application number: 22184966.4
(22) Date of filing: 14.07.2022
(51) Int. Cl.: B01L 3/00, G01N 35/04

(54) **LABORATORY APPARATUS, LABORATORY SAMPLE HANDLING SYSTEM AND USE OF A LABORATORY APPARATUS AND/OR A LABORATORY SAMPLE HANDLING SYSTEM**
LABORGERÄT, LABORPROBENHANDHABUNGSSYSTEM UND VERWENDUNG EINES LABORGERÄTS UND/ODER EINES LABORPROBENHANDHABUNGSSYSTEMS
APPAREIL DE LABORATOIRE, SYSTÈME DE MANIPULATION D'ÉCHANTILLONS DE LABORATOIRE ET UTILISATION D'UN APPAREIL DE LABORATOIRE ET/OU D'UN SYSTÈME DE MANIPULATION D'ÉCHANTILLONS DE LABORATOIRE

(43) Date of publication of application: 17.01.2024
(73) Proprietor: Roche Diagnostics GmbH, 68305 Mannheim (DE); F. Hoffmann-La Roche AG, 4070 Basel (CH)
(72) Inventor: TROPMANN, Artur, 71254 Ditzingen (DE)
(74) Representative: Patentanwälte Ruff, Wilhelm, Beier, Dauster & Partner mbB

(56) References cited:
- EP-A1- 3 236 267
- WO-A1-2017/182353
- WO-A2-2012/112505
- US-A1- 2017 166 428

## Description

### TECHNICAL FIELD AND PRIOR ART

The invention relates to a laboratory apparatus for use in a laboratory sample handling system, a laboratory sample handling system comprising such a laboratory apparatus and a use of such a laboratory apparatus in, in particular such, a laboratory sample handling system and/or of such a laboratory sample handling system.

WO 2017/182353 A1 D1 discloses a known laboratory apparatus for use in a laboratory sample handling system, comprising a cap waste disposal catcher.

### SUMMARY OF THE INVENTION

It is the object of the invention to provide a laboratory apparatus having improved properties. It is a further object of the invention to provide a laboratory sample handling system comprising such a laboratory apparatus and a use of such a laboratory apparatus in, in particular such, a laboratory sample handling system and/or of such a laboratory sample handling system.

This object is solved by a laboratory apparatus and a use as defined in the independent claims. Preferred embodiments are defined in the dependent claims.

The invention relates to a laboratory apparatus for use in a laboratory sample handling system. The apparatus comprises a cap waste disposal catcher and an electric field generator. The catcher is designed to catch a laboratory cap removed from a laboratory sample container containing a laboratory sample. The generator is designed to generate an electric field to, in particular electrically, attract a residue of the sample released by the cap to the catcher.

In particular after the, in particular automated, removal of the cap from the container or decapping process, respectively, the cap may be dropped and/or fall down, in particular due to gravity, to the catcher. The cap, in particular an inner side of the cap, may be contaminated or polluted or coated, in particular wetted, respectively, from the sample in case the container has been tilted prior to the decapping process. During and/or due to an impact of the cap onto a, in particular rigid or solid, respectively, surface of the catcher, the cap may rotate chaotically and uncontrollably. Thereby, this can lead to the release or detachment, respectively, of the residue of the sample, in particular at least one small, in particular micro, droplet, from the cap.

This, in particular the generator, enables to reduce or to mitigate, respectively, or to prevent or to avoid, respectively, a, in particular uncontrolled, spilling or splashing, respectively, of the residue, in particular from or out of, respectively, the catcher and/or when the cap is caught. This enables to reduce or to prevent a contamination, in particular a cross-contamination, of the container and/or the sample and/or other laboratory sample containers and/or other laboratory samples. Thus, the properties of the laboratory apparatus are improved and it may cause fewer or no problems in a laboratory environment than a laboratory apparatus without such an electric field generator.

In particular the term "pre-analytical" may be used synonymously for the term "handling".

The term "has/having" may be used synonymously for the term "comprises/comprising".

The term "configured" or "adapted" may be used synonymously for the term "designed".

The container may be made of glass or plastic or any other, in particular somewhat, solid material. Additionally or alternatively the container may be designed as a tube. Additionally or alternatively the container may comprise an opening, in particular at a top or upper end. In particular the opening may be defined by an end of a wall and/or a circumference of the container. Additionally or alternatively the container or its opening, respectively, may be open or closed, in particular by the cap.

The cap may be different from the container. Additionally or alternatively the cap may comprise rubber and/or plastic or may completely consist of rubber and/or plastic. Additionally or alternatively the cap may comprise a cylindrical shape, in particular with a circular cross section. Additionally or alternatively the cap may be designed as a lid, in particular a rigid lid, or as a foil, in particular a flexible foil.

The container and/or the cap may comprise/s means of attaching to each other with sufficient security, e.g. threads, locks and/or adhesives may be used.

The term "cap receiver" may be used synonymously for the term "catcher".

The generator may be different from the catcher.

The term "produce" or "develop" may be used synonymously for the term "generate".

The term "capture", "confine" or "retain" may be used synonymously for the term "attract".

The term "droplet" may be used synonymously for the term "residue".

The term "transmitted" or "detached" may be used synonymously for the term "released".

The term "from" may be used synonymously for the term "by".

The term "towards" or "into" may be used synonymously for the term "to".

According to an embodiment of the invention, the laboratory apparatus is for use in a laboratory liquid, in particular aqueous, sample handling system. The catcher is designed to catch the cap removed from a laboratory liquid, in particular aqueous, sample container containing a laboratory liquid, in particular aqueous, sample. The generator is designed to generate the field to attract a liquid, in particular aqueous, residue of the sample released by the cap to the catcher. In particular the sample may be a biological liquid or fluid, respectively, in particular a blood sample, an urine sample, an excrement, an interstitial fluid or a lymph. Additionally or alternatively the term "fluid" may be used synonymously for the term "liquid". Additionally or alternatively the term "hydrous" may be used synonymously for the term "aqueous".

In particular the generator may be designed to be, in particular electrically, powered, in particular to generate the field.

According to an embodiment of the invention, the generator comprises, in particular is, an electrostatic generator. The generator is designed to generate an electrostatic field to electrostatically attract the residue. This enables to electrically polarize the, in particular uncharged or electrically neutral, respectively, and/or aqueous residue especially well and/or, in particular thus, the residue to be attracted especially well. In particular the electrostatic generator may be a friction machine, in particular using the triboelectric effect, or an influence machine, in particular using electrostatic induction. Additionally or alternatively the electrostatic generator may be designed to develop a, in particular electric, charge, in particular to generate the electrostatic field.

In particular the generator may comprise at least one electrode. The electrode may be designed to be, in particular electrically, charged, in particular to generate the field.

According to an embodiment of the invention, at least a part of the generator, in particular at least one electrode of the generator designed to be, in particular electrically, charged, in particular to generate the field, is arranged at a, in particular inner, surface of the catcher. Additionally or alternatively the generator is designed to develop a, in particular electric, charge, in particular to generate the field, at a, in particular inner, surface of the catcher. Additionally or alternatively the generator is designed to generate the field at least at a, in particular inner, surface of the catcher. Additionally or alternatively the generator is designed to generate the field to attract the residue to a, in particular inner, surface of the catcher. This enables to reduce or to prevent a spilling of the residue from the catcher especially well. In particular arranged may be spatially arranged. Additionally or alternatively the term "inside" or "internal" may be used synonymously for the term "inner". Additionally or alternatively the surface may be flat. Additionally or alternatively the catcher may be designed to catch the cap by its, in particular inner, surface.

In particular a, in particular inner, surface of the catcher may at least partially or completely consist of a conductive, in particular metallic, material.

At least a part of a, in particular inner, surface of the catcher designed to be exposed to the residue may be hydrophobic.

According to an embodiment of the invention, the laboratory apparatus is for use in a laboratory liquid sample handling system. The catcher comprises a, in particular inner, surface. In particular at least a part of, the surface is designed to be exposed to at least one impacting droplet of a laboratory liquid sample and is, in particular topologically, heterogeneously patterned to originate a heterogeneous flow velocity, in particular distribution, within the impacted droplet on the surface for reducing a rebound energy of the droplet, in particular from the surface. This enables to control or regulate, respectively, a force transmission of the droplet. This enables to reduce or to prevent a spilling of the residue from the catcher especially well. In particular the surface may be flat. Additionally or alternatively the phrase "in contact with" may be used synonymously for the phrase "exposed to". Additionally or alternatively the term "impinging" may be used synonymously for the term "impacting". Additionally or alternatively the term "create" may be used synonymously for the term "originate". Additionally or alternatively the term "along" may be used synonymously for the term "on". Additionally or alternatively the catcher may be designed to catch the cap removed from a laboratory liquid sample container containing a laboratory liquid sample.

These features, in particular alone, may be a, in particular own, invention. In other words:
Laboratory device for use in a, in particular the, laboratory liquid sample handling system, wherein the device comprises:
- a, in particular the and/or inner, surface,
- wherein, in particular at least a part of, the surface is designed to be exposed to at least one impacting droplet of a laboratory liquid sample and is heterogeneously patterned to originate a heterogeneous flow velocity within the impacted droplet on the surface for reducing a rebound energy of the droplet.

In particular the device may be a, in particular the, cap waste disposal catcher. The catcher may comprise the surface and be designed to catch a laboratory cap removed from a laboratory liquid sample container containing a laboratory liquid sample by its surface. In particular the droplet may be released by the cap. Additionally or alternatively the device may be without an electric field generator.

According to an embodiment of the invention, the surface comprises a heterogeneously patterned, in particular chemical, wettability. This enables to originate the heterogeneous flow velocity especially well.

According to an embodiment of the invention, the catcher or the device comprises a low-adhesive, in particular hydrophobic, substrate comprising at least one high-adhesive, in particular hydrophilic, pattern. This enables the heterogeneously patterned wettability of the surface especially well. In particular the substrate may at least partially or completely consist of alumina surface-modified with 1H, 1H, 2H, 2H-perfluorodecyltrimethoxysilane (PFOTS) and exposed to UV-light patternedly. Additionally or alternatively hydrophobic may be super-hydrophobic and/or hydrophilic may be super-hydrophilic. Additionally or alternatively hydrophobic and/or hydrophilic may be determined by static and/or dynamic, in particular advancing and/or receding, contact angle water measurement/s. In particular hydrophobic may mean a contact angle of minimal 120 ° (degree), in particular minimal 150 °. Additionally or alternatively hydrophilic may mean a contact angle of maximal 60 °, in particular maximal 30 °, in particular maximal 15 °.

In particular the surface may be chemically and/or physically treated and/or structured to be heterogeneously patterned. In particular the chemically treated surface may be a macroscopically smooth surface. Additionally or alternatively the physically treated surface may be fine-structured, in particular nano-structured.

According to an embodiment of the invention, the surface is heterogeneously patterned to convert a translation of the impacting droplet at least partially or completely to a deflection, a rolling and/or a rotation, in particular a gyration, of the impacted droplet on the surface. This enables to reduce a rebound energy of the droplet especially well. Additionally or alternatively this, in particular the gyration or an angular momentum, respectively, may be enabled or formed, respectively, by a synergistic effect of asymmetric adhesion or pinning, respectively, forces, in particular accumulated during droplet or liquid film, respectively, retraction, originated from or induced by, respectively, the surface heterogeneity and an excess surface energy of the spreading droplet after impact. In particular the phrase "translational motion" may be used synonymously for the term "translation". Additionally or alternatively the phrase "deflected translational motion" may be used synonymously for the term "deflection". Additionally or alternatively the phrase "gyration motion" may be used synonymously for the term "gyration". Additionally or alternatively the droplet may gyrate clockwise by impacting on a dextrorotary high-adhesive pattern or anticlockwise by impacting on a levorotary high-adhesive pattern.

According to an embodiment of the invention, the catcher or the device comprises an input end and an opposite, in particular output, end. The surface is heterogeneously patterned to convert the translation at least partially or completely to the deflection in a direction from the input end to the opposite end. This enables to reduce or to prevent a spilling of the residue in an undesired direction. In particular the term "entrance" may be used synonymously for the term "input". Additionally or alternatively the term "exit" may be used synonymously for the term "output". Additionally or alternatively the opposite end may be arranged, in particular vertically, below the input end. This may further enable the residue and/or the cap to slide down or downwards, respectively, in particular due to gravity, in particular from the input end to the opposite end. Additionally or alternatively a cap waste disposal compartment, in particular a bucket, may be arranged at the opposite end.

According to an embodiment of the invention, the heterogeneously patterned surface comprises at least one pattern, in particular several patterns each, comprising a rotation symmetry and no mirror symmetry, and/or a mirror symmetry and no rotation symmetry, and/or no rotation symmetry and no mirror symmetry. The rotation symmetry and no mirror symmetry enable the gyration. Additionally or alternatively the mirror symmetry and no rotation symmetry enable the deflection and the rolling. Additionally or alternatively no rotation symmetry and no mirror symmetry enable the gyration, the deflection and the rolling. In particular the term "asymmetric" may be used synonymously for the phrase "no rotation symmetry and no mirror symmetry". Additionally or alternatively the rotation symmetry may be about a rotation axis orthogonal to a surface plane of the surface. Additionally or alternatively the mirror symmetry may be about a mirror plane orthogonal to the surface plane of the surface.

According to an embodiment of the invention, the pattern comprises at least one arc, in particular an open circular arc, and/or a, in particular open and/or Archimedean, spiral segment, in particular forming a spiral. In particular the pattern comprises two to ten, in particular four, arcs. Additionally or alternatively the open circular arcs forming the spiral may enable the rotation symmetry and no mirror symmetry. Additionally or alternatively the term "pinwheel" may be used synonymously for the term "spiral". Additionally or alternatively the at least one circular arc, in particular the circular arcs, may be open and/or concave to the input end and/or closed and/or convex to the opposite end. This may enable the mirror symmetry and no rotation symmetry. Additionally or alternatively the open circular arc may be a half-circle. Additionally or alternatively the open and Archimedean spiral segment may enable no rotation symmetry and no mirror symmetry. Additionally or alternatively the arc may be an arc shape and/or the spiral segment may be a spiral segment shape. Additionally or alternatively the term "design" may be used synonymously for the term "shape".

In particular the heterogeneously patterned surface may comprise at least one pattern, in particular several patterns each, comprising an extension or a size, respectively, in particular a diameter, of minimal 1 mm (millimeter) and/or maximal 20 mm. This may enable the pattern extension to be commensurate, in particular equal, with that of the, in particular impacted and/or maximum spreaded, droplet.

The catcher may comprise a cap catching or input, respectively, area or region, respectively, and be designed to catch the cap in or by, respectively, its catching area. The generator may be designed to generate the field at least in the catching area.

According to an embodiment of the invention, the catcher comprises, in particular is, a cap waste disposal chute. In particular the chute is designed to guide the cap and/or the residue away, in particular to a cap waste disposal compartment, in particular a bucket. In particular the term "funnel" or "duct" may be used synonymously for the term "chute". Additionally or alternatively the term "convey" or "pass" may be used synonymously for the term "guide". Additionally or alternatively an opening of the chute may comprise, in particular be, the catching area.

The invention further relates to a, in particular the, laboratory sample handling system. The system comprises a decapper and a, in particular the, laboratory apparatus according to the invention or as described above, respectively. The decapper is designed to remove a, in particular the, laboratory cap from a, in particular the, laboratory sample container containing a, in particular the, laboratory sample. This enables the container or its opening, respectively, to be opened, in particular which may be required by some types of instruments and/or analysis and/or for the sample. In particular the decapper may be different from the catcher. Additionally or alternatively the decapper may comprise a cap gripper and a container holder. The gripper may be designed to grip the cap. The holder may be designed to hold the container. The gripper and the holder may be moveable, in particular displaceable and/or rotatable, relatively to each other to remove the, in particular gripped, cap from the, in particular held, container. In particular the gripper may be arranged, in particular vertically, above the holder such that, in particular after the removal of the cap, the opening of the container may be, in particular vertically, above the rest of the container. This may enable the sample to stay in the container.

According to an embodiment of the invention, the decapper is designed to drop the removed cap to the catcher. In particular the decapper, in particular its gripper, may be arranged, in particular vertically, above the catcher, in particular such that, in particular after the release of the cap by the decapper, the cap may fall down, in particular due to gravity.

The invention further relates to a use of a, in particular the, laboratory apparatus in a, in particular the, laboratory sample handling system and/or of a, in particular the, laboratory sample handling system according to the invention or as described above, respectively, for catching a, in particular the, laboratory cap removed from a, in particular the, laboratory sample container containing a, in particular the, laboratory sample and for generating an, in particular the, electric field to attract a, in particular the, residue of the sample released by the cap to the catcher.

Additionally or alternatively the invention further relates to a use of a, in particular the, laboratory device in a, in particular the, laboratory liquid sample handling system according to the invention or as described above, respectively, for exposing, in particular at least a part of, the surface heterogeneously patterned to at least one impacting droplet of a, in particular the, laboratory liquid sample to originate a, in particular the, heterogeneous flow velocity within the impacted droplet on the surface for reducing a, in particular the, rebound energy of the droplet.

### BRIEF DESCRIPTION OF THE DRAWINGS

In the following, embodiments of the invention will be described in detail with reference to the drawings. Throughout the drawings, the same elements will be denoted by the same reference numerals.
- Fig. 1: shows a view of a decapper of a laboratory sample handling system according to the invention removing a laboratory cap from a laboratory sample container containing a laboratory sample and a use of the system according to the invention,
- Fig. 2: shows a view of the system of Fig. 1 comprising a laboratory apparatus or a laboratory device according to the invention comprising or being a cap waste disposal catcher and an electric field generator and the catcher or the device comprising a heterogeneously patterned surface and the decapper dropping the removed cap to the catcher and the use,
- Fig. 3: shows the catcher of Fig. 2 catching the removed and dropped cap and an electric field generated by the generator of Fig. 2 attracting a residue of the sample released by the cap to the catcher and a use of the catcher according to the invention,
- Fig. 4: shows a droplet of the sample impacting and impacted on a differently heterogeneously patterned surface of the catcher or the device of Fig. 2 comprising arcs forming a spiral comprising a rotation symmetry and no mirror symmetry and a use of the catcher or the device according to the invention,
- Fig. 5: shows a droplet of the sample impacted on the surface of the catcher or the device of Fig. 2 comprising at least one arc comprising a mirror symmetry and no rotation symmetry and a use of the catcher or the device according to the invention, and
- Fig. 6: shows a droplet of the sample impacted on a differently heterogeneously patterned surface of the catcher or the device of Fig. 2 comprising at least one Archimedean spiral segment comprising no rotation symmetry and no mirror symmetry and a use of the catcher or the device according to the invention.

### DETAILED DESCRIPTION OF EMBODIMENTS OF THE INVENTION

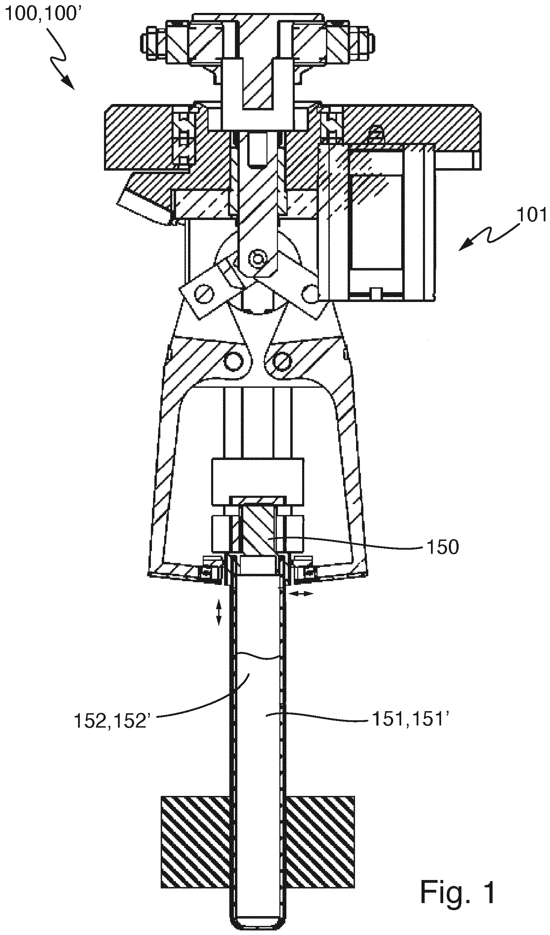

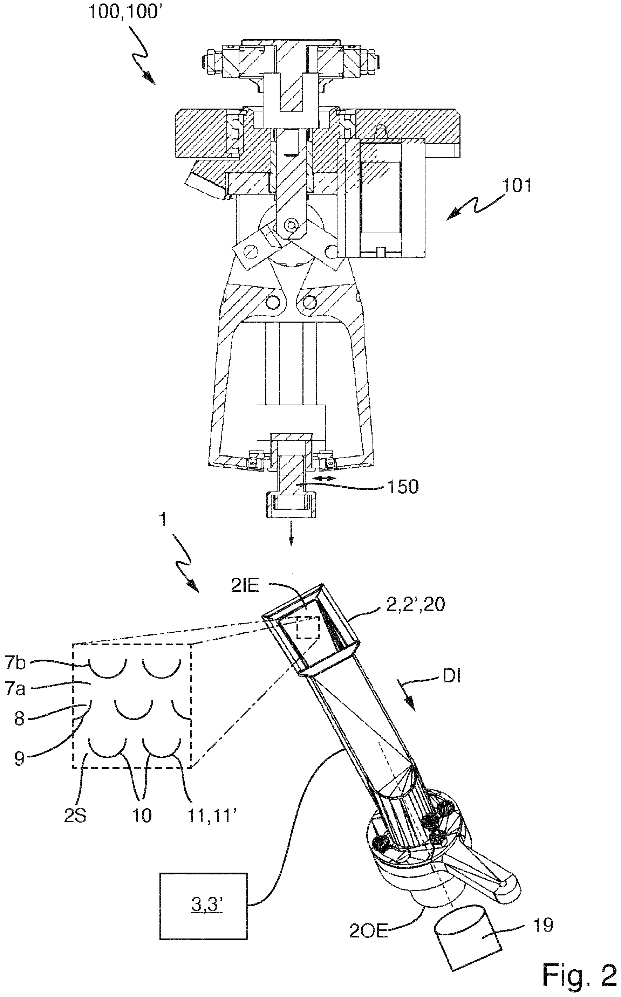

Fig. 1 and 2 show a laboratory, in particular liquid, in particular aqueous, sample handling system 100, 100' and a use of the system 100. The system 100 comprises a decapper 101 and a laboratory apparatus 1 or a laboratory device 20.

The decapper 101 is designed to, in particular automatically, remove a laboratory cap 150 from a laboratory, in particular liquid, in particular aqueous, sample container 151, 151' containing a laboratory, in particular liquid, in particular aqueous, sample 152, 152', in particular removes.

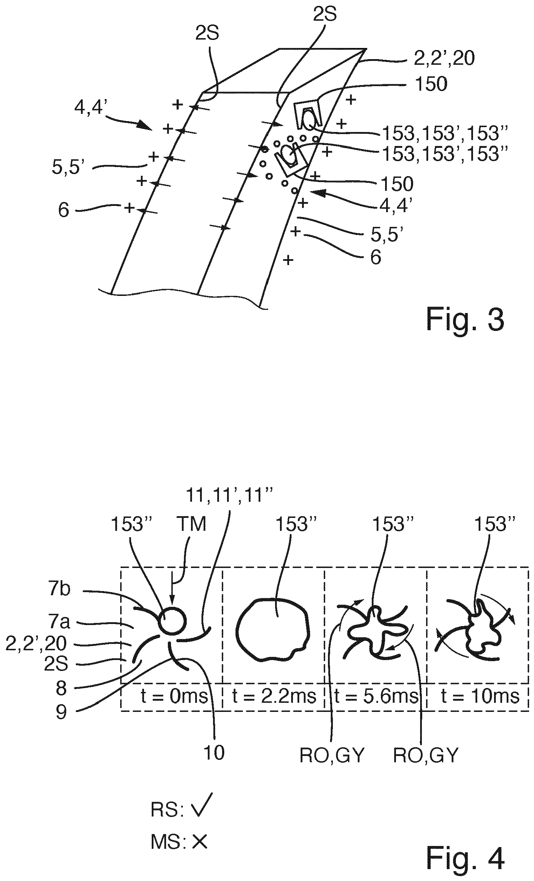

The laboratory apparatus 1 for a use in the laboratory, in particular liquid, in particular aqueous, sample handling system 100, 100' comprises a cap waste disposal catcher 2, as shown in Fig. 3 to 6, and an electric field generator 3.

The decapper 101 is designed to, in particular automatically, drop the removed cap 150 to the catcher 2, in particular drops.

The catcher 2 is designed to catch the laboratory cap 150 removed from the laboratory, in particular liquid, in particular aqueous, sample container 151, 151' containing the laboratory, in particular liquid, in particular aqueous, sample 152, 152', in particular catches.

The generator 3 is designed to, in particular automatically, generate an electric field 4 to attract a, in particular liquid, in particular aqueous, residue 153, 153' of the sample 152, 152' released by the cap 150 to the catcher 2, in particular generates and, thus, attracts.

In detail the generator 3 comprises, in particular is, an electrostatic generator 3'. The generator 3 is designed to generate an electrostatic field 4' to electrostatically attract the residue 153.

Furthermore, at least a part 5 of the generator 3, in particular at least one electrode 5' of the generator 3 designed to be charged, in particular being charged, is arranged at a, in particular inner, surface 2S of the catcher 2.

Additionally or alternatively the generator 3 is designed to, in particular automatically, develop a charge 6 at the a, in particular inner, surface 2S of the catcher 2, in particular develops.

Additionally or alternatively the generator 3 is designed to generate the field 4 at least at the, in particular inner, surface 2S of the catcher 2.

Additionally or alternatively the generator 3 is designed to generate the field 4 to attract the residue 153 to the, in particular inner, surface 2S of the catcher 2.

In the shown embodiment the charge 6 is positive. In alternative embodiments the charge may be negative.

Moreover, the catcher 2 is designed to catch the cap 150 by its surface 2S.

Further, the catcher 2 or the device 20 for a use in the laboratory liquid sample handling system 100' comprises the, in particular inner, surface 2S. The surface 2S is designed to be exposed to at least one impacting droplet 153" of the laboratory liquid sample 152' and is heterogeneously patterned to originate a heterogeneous flow velocity within the impacted droplet 153" on the surface 2S for reducing a rebound energy of the droplet 153", in particular is exposed and, thus, originates and, thus, reduces.

In detail the surface 2S comprises a heterogeneously patterned wettability 7a, 7b.

In detail the catcher 2 or the device 20 comprises a low-adhesive, in particular hydrophobic, substrate 8 comprising at least one high-adhesive, in particular hydrophilic, pattern 9.

Furthermore, surface 2S is heterogeneously patterned to convert a translation TM of the impacting droplet 153" at least partially to a deflection DF, a rolling RL and/or a rotation RO, in particular a gyration GY, of the impacted droplet 153" on the surface 2S, in particular converts.

In detail the catcher 2 or the device 20 comprises an input end 2IE and an opposite, in particular output, end 2OE. The surface 2S is heterogeneously patterned to convert the translation TM at least partially to the deflection DF in a direction DI from the input end 2IE to the opposite end 2OE.

Moreover, the heterogeneously patterned surface 2S comprises at least one pattern 10, in particular several patterns 10 each, comprising a rotation symmetry RS and no mirror symmetry MS, and/or a mirror symmetry MS and no rotation symmetry RS, and/or no rotation symmetry RS and no mirror symmetry MS.

In detail the pattern 10 comprises at least one arc 11, in particular an open circular arc 11', and/or a, in particular open and/or Archimedean, spiral segment 11", in particular forming a spiral 11‴.

In Fig. 4 the translation TM of the impacting droplet 153" is converted to the gyration GY of the impacted droplet 153" on the low-adhesive substrate 8 comprising the at least one high-adhesive pattern 9, 10 comprising the open circular arcs 11' forming the spiral 11‴ comprising the rotation symmetry RS and no mirror symmetry MS. In particular during a spreading stage, a translational kinetic energy is converted to a surface energy of the droplet 153". After reaching maximum spreading and forming a circular film, the liquid or droplet 153", respectively, heterogeneously recedes, in particular on the low-adhesive substrate 8 faster than on the high-adhesive pattern 9, 10, thus, rotating, in particular gyrating. In other words: the surface energy is converted to a rotational kinetic energy.

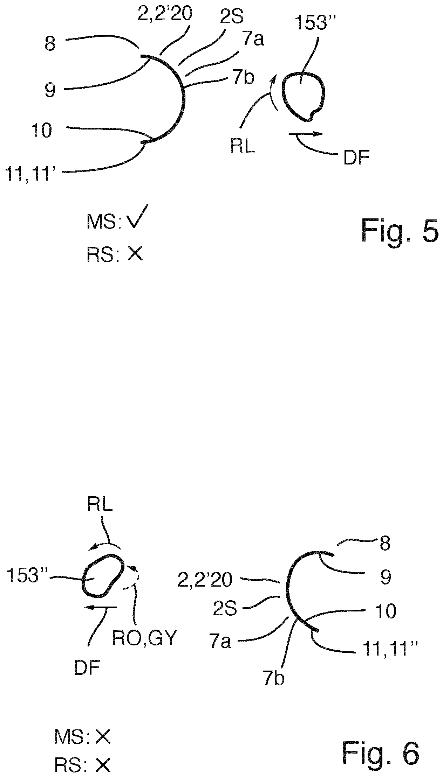

In Fig. 5 the translation TM of the impacting droplet 153" is converted to the deflection DF and the rolling RL of the impacted droplet 153" on the low-adhesive substrate 8 comprising the at least one high-adhesive pattern 9, 10 comprising the circular arcs 11' open to the input end 2IE and/or closed to the opposite end 2OE comprising the mirror symmetry MS and no rotation symmetry RS.

In Fig. 6 the translation TM of the impacting droplet 153" is converted to the deflection DF, the rolling RL and/or the gyration GY of the impacted droplet 153" on the low-adhesive substrate 8 comprising the at least one high-adhesive pattern 9, 10 comprising the open Archimedean spiral segment 11" comprising no rotation symmetry RS and no mirror symmetry MS.

Further, the catcher 2 comprises, in particular is, a cap waste disposal chute 2'. In particular the chute 2' is designed to guide the cap 150 and/or the residue 153 away, in particular to a cap waste disposal compartment 19, in particular guides.

As the shown and above-described embodiments reveal, the invention provides a laboratory apparatus having improved properties. Furthermore, the invention provides a laboratory sample handling system comprising such a laboratory apparatus and a use of such a laboratory apparatus in, in particular such, a laboratory sample handling system and/or of such a laboratory sample handling system.

## Claims

1. Laboratory apparatus (1) for use in a laboratory sample handling system (100), wherein the apparatus (1) comprises:
- a cap waste disposal catcher (2), wherein the catcher (2) is designed to catch a laboratory cap (150) removed from a laboratory sample container (151) containing a laboratory sample (152), and
- an electric field generator (3), wherein the generator (3) is designed to generate an electric field (4) to attract a residue (153) of the sample (152) released by the cap (150) to the catcher (2).

2. Laboratory apparatus (1) according to the preceding claim for use in a laboratory liquid, in particular aqueous, sample handling system (100'),
- wherein the catcher (2) is designed to catch the cap (150) removed from a laboratory liquid, in particular aqueous, sample container (151') containing a laboratory liquid, in particular aqueous, sample (152'), and
- wherein the generator (3) is designed to generate the field (4) to attract a liquid, in particular aqueous, residue (153') of the sample (152') released by the cap (150) to the catcher (2).

3. Laboratory apparatus (1) according to any one of the preceding claims,
- wherein the generator (3) comprises, in particular is, an electrostatic generator (3'), wherein the generator (3) is designed to generate an electrostatic field (4') to electrostatically attract the residue (153).

4. Laboratory apparatus (1) according to any one of the preceding claims,
- wherein at least a part (5) of the generator (3), in particular at least one electrode (5') of the generator (3) designed to be charged, is arranged at a, in particular inner, surface (2S) of the catcher (2), and/or
- wherein the generator (3) is designed to develop a charge (6) at a, in particular inner, surface (2S) of the catcher (2), and/or
- wherein the generator (3) is designed to generate the field (4) at least at a, in particular inner, surface (2S) of the catcher (2), and/or
- wherein the generator (3) is designed to generate the field (4) to attract the residue (153) to a, in particular inner, surface (2S) of the catcher (2).

5. Laboratory apparatus (1) according to any one of the preceding claims for use in a laboratory liquid sample handling system (100'),
- wherein the catcher (2) comprises a, in particular inner, surface (2S),
- wherein the surface (2S) is designed to be exposed to at least one impacting droplet (153") of a laboratory liquid sample (152') and is heterogeneously patterned to originate a heterogeneous flow velocity within the impacted droplet (153") on the surface (2S) for reducing a rebound energy of the droplet (153").

6. Laboratory apparatus (1) according to the preceding claim,
- wherein the surface (2S) comprises a heterogeneously patterned wettability (7a, 7b).

7. Laboratory apparatus (1) according to the preceding claim,
- wherein the catcher (2) comprises a low-adhesive, in particular hydrophobic, substrate (8) comprising at least one high-adhesive, in particular hydrophilic, pattern (9).

8. Laboratory apparatus (1) according to any one of the three preceding claims,
- wherein the surface (2S) is heterogeneously patterned to convert a translation (TM) of the impacting droplet (153") at least partially to a deflection (DF), a rolling (RL) and/or a rotation (RO), in particular a gyration (GY), of the impacted droplet (153") on the surface (2S).

9. Laboratory apparatus (1) according to the preceding claim,
- wherein the catcher (2) comprises an input end (2IE) and an opposite, in particular output, end (2OE), and
- wherein the surface (2S) is heterogeneously patterned to convert the translation (TM) at least partially to the deflection (DF) in a direction (DI) from the input end (2IE) to the opposite end (2OE).

10. Laboratory apparatus (1) according to any one of the five preceding claims,
- wherein the heterogeneously patterned surface (2S) comprises at least one pattern (10), in particular several patterns (10) each, comprising a rotation symmetry (RS) and no mirror symmetry (MS), and/or a mirror symmetry (MS) and no rotation symmetry (RS), and/or no rotation symmetry (RS) and no mirror symmetry (MS).

11. Laboratory apparatus (1) according to the preceding claim,
- wherein the pattern (10) comprises at least one arc (11), in particular an open circular arc (11'), and/or a, in particular open and/or Archimedean, spiral segment (11 "), in particular forming a spiral (11‴).

12. Laboratory apparatus (1) according to any one of the preceding claims,
- wherein the catcher (2) comprises, in particular is, a cap waste disposal chute (2'), in particular wherein the chute (2') is designed to guide the cap (150) and/or the residue (153) away, in particular to a cap waste disposal compartment (19).

13. Laboratory sample handling system (100), wherein the system (100) comprises:
- a decapper (101), wherein the decapper (101) is designed to remove a laboratory cap (150) from a laboratory sample container (151) containing a laboratory sample (152), and
- a laboratory apparatus (1) according to any one of the preceding claims.

14. Laboratory sample handling system (1) according to the preceding claim,
- wherein the decapper (101) is designed to drop the removed cap (150) to the catcher (2).

15. Use of a laboratory apparatus (1) in a laboratory sample handling system (100) and/or of a laboratory sample handling system (100) according to any one of the preceding claims for catching a laboratory cap (150) removed from a laboratory sample container (151) containing a laboratory sample (152) and for generating an electric field (4) to attract a residue (153) of the sample (152) released by the cap (150) to the catcher (2).

## Patentansprüche

1. Laborgerät (1) zur Verwendung in einem Laborprobenhandhabungssystem (100), wobei das Gerät (1) Folgendes umfasst:
- einen Kappenentsorgungsauffänger (2), wobei der Auffänger (2) so konstruiert ist, dass er eine Laborkappe (150) auffängt, die von einem Laborprobenbehälter (151) entfernt wurde, der eine Laborprobe (152) enthält, und
- einen Generator von elektrischen Feldern (3), wobei der Generator (3) so konstruiert ist, dass er ein elektrisches Feld (4) erzeugt, um einen Rückstand (153) der Probe (152), der von der Kappe (150) freigesetzt wurde, zu dem Auffänger (2) zu ziehen.

2. Laborgerät (1) nach dem vorstehenden Anspruch zur Verwendung in einem Handhabungssystem für flüssige, insbesondere wässrige Laborproben (100'),
- wobei der Auffänger (2) so konstruiert ist, dass er die Kappe (150) auffängt, die von einem Behälter für flüssige, insbesondere wässrige Laborproben (151'), der eine flüssige, insbesondere wässrige Laborprobe (152') enthält, entfernt wurde und
- wobei der Generator (3) so konstruiert ist, dass er das Feld (4) erzeugt, um einen flüssigen, insbesondere wässrigen Rückstand (153') der Probe (152'), der von der Kappe (150) freigesetzt wurde, zu dem Auffänger (2) zu ziehen.

3. Laborgerät (1) nach einem der vorstehenden Ansprüche,
- wobei der Generator (3) einen elektrostatischen Generator (3') umfasst, insbesondere ein solcher ist, wobei der Generator (3) so konstruiert ist, dass er ein elektrostatisches Feld (4') erzeugt, um den Rückstand (153) elektrostatisch anzuziehen.

4. Laborgerät (1) nach einem der vorstehenden Ansprüche,
- wobei mindestens ein Teil (5) des Generators (3), insbesondere mindestens eine Elektrode (5') des Generators (3), die zum Laden konstruiert ist, an einer Fläche (2S), insbesondere Innenfläche, des Auffängers (2) angeordnet ist, und/oder
- wobei der Generator (3) so konstruiert ist, dass er eine Ladung (6) an einer Fläche (2S), insbesondere Innenfläche, des Auffängers (2) entwickelt, und/oder
- wobei der Generator (3) so konstruiert ist, dass er das Feld (4) mindestens an einer Fläche (2S), insbesondere Innenfläche, des Auffängers (2) erzeugt, und/oder
- wobei der Generator (3) so konstruiert ist, dass er das Feld (4) erzeugt, um den Rückstand (153) zu einer Fläche (2S), insbesondere Innenfläche, des Auffängers (2) zu ziehen.

5. Laborgerät (1) nach einem der vorstehenden Ansprüche zur Verwendung in einem Handhabungssystem für flüssige Laborproben (100'),
- wobei der Auffänger (2) eine Fläche (2S), insbesondere Innenfläche, umfasst,
- wobei die Fläche (2S) so konstruiert ist, dass sie mindestens einem auftreffenden Tröpfchen (153") von einer flüssigen Laborprobe (152') ausgesetzt werden kann, und heterogen strukturiert ist, um eine heterogene Fließgeschwindigkeit innerhalb des auftreffenden Tröpfchens (153") auf der Fläche (2S) zu erzeugen, um eine Rückprallenergie des Tröpfchens (153") zu reduzieren.

6. Laborgerät (1) nach dem vorstehenden Anspruch,
- wobei die Fläche (2S) eine heterogen strukturierte Benetzbarkeit (7a, 7b) umfasst.

7. Laborgerät (1) nach dem vorstehenden Anspruch,
- wobei der Auffänger (2) ein schwach haftendes, insbesondere hydrophobes, Substrat (8) umfasst, das mindestens eine stark haftende, insbesondere hydrophile, Struktur (9) umfasst.

8. Laborgerät (1) nach einem der drei vorstehenden Ansprüche,
- wobei die Fläche (2S) heterogen strukturiert ist, um eine Translation (TM) des auftreffenden Tröpfchens (153") mindestens teilweise in eine Ablenkung (DF), ein Wanken (RL) und/oder eine Rotation (RO), insbesondere eine Gyration (GY), des auftreffenden Tröpfchens (153") auf der Fläche (2S) umzuwandeln.

9. Laborgerät (1) nach dem vorstehenden Anspruch,
- wobei der Auffänger (2) ein Eingangsende (2IE) und ein gegenüberliegendes Ende, insbesondere Ausgangsende (2OE), umfasst, und
- wobei die Fläche (2S) heterogen strukturiert ist, um die Translation (TM) mindestens teilweise in die Ablenkung (DF) in eine Richtung (DI) von dem Eingangsende (2IE) zu dem gegenüberliegenden Ende (2OE) umzuwandeln.

10. Laborgerät (1) nach einem der fünf vorstehenden Ansprüche,
- wobei die heterogen strukturierte Fläche (2S) mindestens eine Struktur (10), insbesondere mehrere Strukturen (10) umfasst, die jeweils eine Rotationssymmetrie (RS) und keine Spiegelsymmetrie (MS) und/oder eine Spiegelsymmetrie (MS) und keine Rotationssymmetrie (RS) und/oder keine Rotationssymmetrie (RS) und keine Spiegelsymmetrie (MS) umfassen.

11. Laborgerät (1) nach dem vorstehenden Anspruch,
- wobei die Struktur (10) mindestens einen Bogen (11), insbesondere einen offenen Kreisbogen (11'), und/oder ein, insbesondere offenes und/oder archimedisches, Spiralsegment (11"), das insbesondere eine Spirale (11‴) bildet, umfasst.

12. Laborgerät (1) nach einem der vorstehenden Ansprüche,
- wobei der Auffänger (2) eine Kappenentsorgungsrutsche (2') umfasst, insbesondere eine solche ist, insbesondere wobei die Rutsche (2') so konstruiert ist, dass sie die Kappe (150) und/oder den Rückstand (153) weg, insbesondere zu einem Kappenentsorgungsfach (19) leitet.

13. Laborprobenhandhabungssystem (100), wobei das System (100) Folgendes umfasst:
- einen Kappenabnehmer (101), wobei der Kappenabnehmer (101) so konstruiert ist, dass er eine Laborkappe (150) von einem Laborprobenbehälter (151), der eine Laborprobe (152) enthält, entfernt, und
- ein Laborgerät (1) nach einem der vorstehenden Ansprüche.

14. Laborprobenhandhabungssystem (1) nach dem vorstehenden Anspruch,
- wobei der Kappenabnehmer (101) so konstruiert ist, dass er die entfernte Kappe (150) in den Auffänger (2) fallen lässt.

15. Verwendung eines Laborgerätes (1) in einem Laborprobenhandhabungssystem (100) und/oder eines Laborprobenhandhabungssystems (100) nach einem der vorstehenden Ansprüche zum Auffangen einer Laborkappe (150), die von einem Laborprobenbehälter (151) entfernt wurde, der eine Laborprobe (152) enthält, und zum Erzeugen eines elektrischen Feldes (4), um einen Rückstand (153) der Probe (152), der von der Kappe (150) freigesetzt wurde, zu dem Auffänger (2) zu ziehen.

## Revendications

1. Appareil de laboratoire (1) pour une utilisation dans un système de manipulation d'échantillons de laboratoire (100), dans lequel l'appareil (1) comprend :
- un réceptacle (2) pour l'élimination de capuchons usagés, le réceptacle (2) étant conçu pour recevoir un capuchon de laboratoire (150) retiré d'un récipient d'échantillon de laboratoire (151) contenant un échantillon de laboratoire (152), et
- un générateur de champ électrique (3), le générateur (3) étant conçu pour générer un champ électrique (4) afin d'attirer un résidu (153) de l'échantillon (152) libéré par le capuchon (150) jusqu'au réceptacle (2).

2. Appareil de laboratoire (1) selon la revendication précédente pour une utilisation dans un système de manipulation d'échantillons de laboratoire (100') liquides, en particulier aqueux,
- dans lequel le réceptacle (2) est conçu pour recevoir le capuchon (150) retiré d'un récipient d'échantillon de laboratoire (151') liquide, en particulier aqueux, contenant un échantillon de laboratoire (152') liquide, en particulier aqueux, et
- dans lequel le générateur (3) est conçu pour générer le champ (4) pour attirer un résidu (153') liquide, en particulier aqueux, de l'échantillon (152') libéré par le capuchon (150) jusqu'au réceptacle (2).

3. Appareil de laboratoire (1) selon l'une quelconque des revendications précédentes,
- dans lequel le générateur (3) comprend, en particulier est, un générateur électrostatique (3'), dans lequel le générateur (3) est conçu pour générer un champ électrostatique (4') pour attirer de manière électrostatique le résidu (153).

4. Appareil de laboratoire (1) selon l'une quelconque des revendications précédentes,
- dans lequel au moins une partie (5) du générateur (3), en particulier au moins une électrode (5') du générateur (3) conçue pour être chargée, est agencée au niveau d'une surface (2S), en particulier interne, du réceptacle (2), et/ou
- dans lequel le générateur (3) est conçu pour développer une charge (6) au niveau d'une surface (2S), en particulier interne, du réceptacle (2), et/ou
- dans lequel le générateur (3) est conçu pour générer le champ (4) au moins au niveau d'une surface (2S), en particulier interne, du réceptacle (2), et/ou
- dans lequel le générateur (3) est conçu pour générer le champ (4) afin d'attirer le résidu (153) jusqu'à une surface (2S), en particulier interne, du réceptacle (2).

5. Appareil de laboratoire (1) selon l'une quelconque des revendications précédentes pour une utilisation dans un système de manipulation d'échantillons de laboratoire (100') liquides,
- dans lequel le réceptacle (2) comprend une surface (2S), en particulier interne,
- dans lequel la surface (2S) est conçue pour être exposée à au moins une gouttelette (153") impactante d'un échantillon de laboratoire (152') liquide et porte des motifs hétérogènes pour initier une vitesse d'écoulement hétérogène à l'intérieur de la gouttelette (153") impactée sur la surface (2S) afin de réduire une énergie de rebond de la gouttelette (153").

6. Appareil de laboratoire (1) selon la revendication précédente,
- dans lequel la surface (2S) comprend une mouillabilité à motifs hétérogènes (7a, 7b).

7. Appareil de laboratoire (1) selon la revendication précédente,
- dans lequel le réceptacle (2) comprend un substrat (8) faiblement adhésif, en particulier hydrophobe, comprenant au moins un motif (9) fortement adhésif, en particulier hydrophile.

8. Appareil de laboratoire (1) selon l'une quelconque des trois revendications précédentes,
- dans lequel la surface (2S) porte des motifs hétérogènes pour convertir une translation (TM) de la gouttelette (153") impactante au moins partiellement en une déflexion (DF), un roulement (RL) et/ou une rotation (RO), en particulier une giration (GY), de la gouttelette (153") impactée sur la surface (2S).

9. Appareil de laboratoire (1) selon la revendication précédente,
- dans lequel le réceptacle (2) comprend une extrémité d'entrée (2IE) et une extrémité opposée (2OE), en particulier de sortie, et
- dans lequel la surface (2S) porte des motifs hétérogènes pour convertir la translation (TM) au moins partiellement en la déflexion (DF) dans une direction (DI) depuis l'extrémité d'entrée (2IE) jusqu'à l'extrémité opposée (2OE).

10. Appareil de laboratoire (1) selon l'une quelconque des cinq revendications précédentes,
- dans lequel la surface (2S) à motifs hétérogènes comprend au moins un motif (10), en particulier plusieurs motifs (10) comprenant chacun une symétrie de rotation (RS) et aucune symétrie miroir (MS), et/ou une symétrie miroir (MS) et aucune symétrie de rotation (RS), et/ou aucune symétrie de rotation (RS) et aucune symétrie miroir (MS).

11. Appareil de laboratoire (1) selon la revendication précédente,
- dans lequel le motif (10) comprend au moins un arc (11), en particulier un arc circulaire ouvert (1 1'), et/ou un segment en spirale (11"), en particulier ouvert et/ou d'Archimède, en particulier formant une spirale (11‴).

12. Appareil de laboratoire (1) selon l'une quelconque des revendications précédentes,
- dans lequel le réceptacle (2) comprend, en particulier est, une goulotte (2') pour l'élimination de capuchons usagés, en particulier dans lequel la goulotte (2') est conçue pour guider le capuchon (150) et/ou le résidu (153) loin, en particulier jusqu'à un compartiment pour l'élimination de capuchons usagés (19).

13. Système de manipulation d'échantillons de laboratoire (100), dans lequel le système (100) comprend :
- un décapsuleur (101), dans lequel le décapsuleur (101) est conçu pour retirer un capuchon de laboratoire (150) d'un récipient d'échantillon de laboratoire (151) contenant un échantillon de laboratoire (152), et
- un appareil de laboratoire (1) selon l'une quelconque des revendications précédentes.

14. Système de manipulation d'échantillons de laboratoire (1) selon la revendication précédente,
- dans lequel le décapsuleur (101) est conçu pour laisser tomber le capuchon (150) retiré jusqu'au réceptacle (2).

15. Utilisation d'un appareil de laboratoire (1) dans un système de manipulation d'échantillons de laboratoire (100) et/ou d'un système de manipulation d'échantillons de laboratoire (100) selon l'une quelconque des revendications précédentes pour recevoir un capuchon de laboratoire (150) retiré d'un récipient d'échantillon de laboratoire (151) contenant un échantillon de laboratoire (152) et pour générer un champ électrique (4) afin d'attire101r un résidu (153) de l'échantillon (152) libéré par le capuchon (150) jusqu'au réceptacle (2).
